# EUROPÄISCHE PATENTANMELDUNG

(11) **EP 0 811 566 A2**
(43) Veröffentlichungstag der Anmeldung: **10.12.1997**
(21) Anmeldenummer: 97107531.2
(22) Anmeldetag: 07.05.1997
(51) Int. Cl.: B65G 1/137

(54) **Verfahren und Vorrichtung zum automatischen Kommissionieren und Versandbereitstellen von gestapelten Artikeln**

(30) Priorität: 12.05.1996 DE 19618918
(71) Anmelder: P+P MATERIALFLUSS-SYSTEME GmbH, 90411 Nürnberg (DE)
(72) Erfinder: Preiss, Manfred, 90411 Nürnberg (DE)
(74) Vertreter: Hanke, Hilmar

(57) **Zusammenfassung**

Für ein automatisches Kommissionieren und Versandbereitstellen von in Kommissionierschächten (4) eines gegebenenfalls raumgroßen Kommissionierautomaten (1) gestapelten Artikeln (2) wird vorgeschlagen, daß der oder die zu kommissionierenden Artikel von der Stapeloberseite eines ausgewählten Kommissionierschachtes mit Hilfe von positionierten Kommissionierwägen (3) entnommen werden, wobei vor dem Entnahmevorgang der Artikelstapel des ausgewählten Kommissionierschachtes über eine im wesentlichen schachtoberseitige Entnahmeebene (A) angehoben wird und der oder die über die Entnahmeebene angehobenen Artikel durch einen Schiebe- oder Schwenkmechanismus (11) entnommen werden.

## Beschreibung

Die Erfindung betrifft ein Verfahren zum automatischen Kommissionieren und Versandbereitstellen von in Kommissionierschächten eines Kommissionierautomaten gestapelten Artikeln mit Hilfe einer Entnahmevorrichtung, sowie ein nach diesem Verfahren betriebener Kommissionierautomat.

Bekannte Kommissionierautomaten etwa in der gemäß EP 0 213 360 beschriebenen Art, eingesetzt z.B. im Pharmagroßhandel, besitzen im wesentlichen vertikale in Reihe angeordnete Kommissionierschächte, in denen quaderförmige Artikel direkt aufeinanderlastend gestapelt sind. An der Unterseite des Artikelstapels befindet sich eine Entnahmevorrichtung in Form zumindest eines kraftangetriebenen Ausschiebers, welcher quer zum Artikelstapel jeweils den stapeluntersten zu kommissionierenden Artikel im wesentlich horizontal ausschiebt und auf ein vorbeilaufendes Förderband fördert. Aufgrund des Eigengewichts des Artikelstapels gelangt bei der Entnahme eines Artikels der gesamte restliche Artikelstapel um eine Artikelposition selbsttätig nach unten.

Von Nachteil ist, daß bei zu großen oder schwergewichtigen Artikeln oder bei zu großer Stapelhöhe während eines Ausschiebevorgangs die Verpackung des Artikels beschädigt wird oder zumindest beschädigt werden kann. Die Stapelhöhe ist also bei bekannten Kommssionierautomaten grundsätzlich begrenzt, etwa auf Mannshöhe bei kleinen quaderförmigen Artikeln wie z.B. Arzneimitteln. Von Nachteil ferner ist, daß bei einer Artikelentnahme der gesamte restliche Artikelstapel eines Kommissionierschachtes ruckartig nachruscht und auf den untersten Artikel einen erheblichen Kraftimpuls ausübt, der selbst bei vergleichsweise geringem Eigengewicht des Stapels zu einer Beschädigung des untersten Artikels oder seiner Verpackung führen kann. Leicht zerbrechliche Erzeugnisse aus Glas oder etwa schwergewichtige, nicht folienverpackte Bücher, welche meist noch eine äußere Papiereinbindung besitzen, können auch bei niedrigem Artikelstapel nicht mit den bekannten Kommissionierautomaten kommissioniert werden.

Aufgabe der Erfindung ist die Schaffung eines Verfahrens und einer Vorrichtung zum automatischen Kommissionieren und Versandbereitstellen von in Kommisionierschächten gestapelten Artikeln der eingangs genannten Art, welche(s) auch für größere Stapelhöhen, etwa 3m und mehr, geeignet ist und auf einfache Weise beschädigungsunempfindlich ein effektives Kommissionieren selbst von schweren und/oder zerbrechlichen Artikeln wie Büchern oder Glasartikeln zuverlässig ermöglicht.

Gelöst wird die der Erfindung zugrundeliegende Aufgabe durch ein Verfahren der im Anspruch 1 angeführten Art. Vorteilhaft weitergebildt wird das erfindungsgemäße Verfahren durch die Merkmale der Ansprüche 2 bis 8.

Ein nach dem vorgenannten Verfahren betriebener Kommissionierautomat kennzeichnet sich durch die Merkmale des Anspruchs 9. Vorteilhaft weitergebildet wird der Kommissionierautomat durch die Merkmale der Ansprüche 10 bis 13.

Wesen des erfindungsgemäßen Verfahrens ist, daß der oder die zu kommissionierenden Artikel von der Stapeloberseite eines ausgewählten Kommissionierschachtes entnommen werden, und zwar mit Hilfe von Entnahmevorrichtungen, die bei jedem Kommissionierschacht installiert oder alternativ in besonders vorteilhafter Variante beweglich, insbesondere selbsttätig verfahrbar sind.

Insbesondere wird vor dem Entnahmevorgang der Artikelstapel des ausgewählten Kommissionierschachtes über eine im wesentlichen schachtoberseitige Entnahmeebene angehoben, und es werden der oder die über die Entnahmeebene angehobenen Artikel durch die Entnahmevorrichtung im wesentlichen horizontal, vorzugsweise durch Verschieben, entnommen.

Es kann so verfahren werden, daß eine vorzugsweise verfahrbare Entnahmevorrichtung vor dem Entnahmevorgang bei einem ausgewählten Kommissionierschacht positioniert und nach einem Entnahmevorgang mit den kommissionierten Artikeln zu einer Übergabestation kraftangetrieben bewegt wird, und bei der Übergabestation die kommissionierten Artikel abgegeben werden.

Die entnommenen kommissionierten Artikel werden in einem Artikelaufnahmeschacht der Entnahmevorrichtung auf einer kraftangetriebenen höhenverstellbaren Plattform gestapelt.

Für ein Positionieren der Entnahmevorrichtung bei einem ausgewählten Kommissionierschacht wird die Plattform der Entnahmevorrichtung auf das Niveau der Entnahmeebene eingestellt, so daß eine Horizontalverschiebung zu kommissionierender Artikel von der Entnahmeebene des Kommissionierschachtes auf die Plattform der Entnahmevorrichtung bzw. auf die Oberseite bereits auf der Plattform gestapelter Artikel möglich ist.

Vorzugsweise wird die Plattform der Entnahmevorrichtung nach einem Beladen mit kommissionierten Artikeln um das gleiche Höhenmaß abgesenkt, wie der diesen Artikeln zugeordnete Artikelstapel des ausgewählten Kommissionierschachtes vorher für den Entnahmevorgang angehoben worden ist.

Alternativ kann auch vor dem Entnahmevorgang die Oberseite der Plattform der Entnahmevorrichtung bzw. die Oberseite der auf der Plattform bereits abgeladener kommissionierter Artikel in Höhe der Entnahmeebene eines ausgewählten Kommissionierschachtes für eine Höhenendstellung der Plattform bei einem Entnahmevorgang abgetastet bzw. gefühlt werden.

Sind höhere Artikelstapel des gleichen Artikels zu kommissionieren, werden zwecks Verringerung der Auflast kommissionierte Artikel des gleichen ausgewählten Kommissionierschachtes in zumindest zwei aufeinanderfolgenden Teilschritten der Plattform der Entnahmevorrichtung bzw. der Oberseite bereits darauf abgeladener kommissionierter Artikel zugeführt.

Bei in unterschiedlicher Größe zu kommissionierenden Artikeln wird vorzugsweise zuerst der Artikelstapel mit den größten Artikeln und nachfolgend der Artikelstapel mit den nächst kleineren Artikeln, etc., von der Entnahmevorrichtung angesteuert und kommissioniert, um einen stabilen Artikelstapel der kommissionierten Artikel in der Entnahmevorrichtung auszubilden.

Insbesondere wird die mit kommissionierten Artikeln beladene Entnahmevorrichtung im wesentlichen horizontal zu der von den Kommissionierschächten benachbarten oder entfernten Übergabestation bewegt, und es wird die Plattform der mit kommissionierten Artikeln beladenen Entnahmevorrichtung auf das Niveau der Übergabestation abgesenkt, worauf die kommissionierten Artikel der Übergabestation für einen Weitertransport übergeben werden. Bei der Übergabestation kann vorgesehen sein, daß die kommissionierten Artikel seitlich in eine offene Verpackung hineingeschoben werden, und die Verpackung geschlossen wird, bevor ein Abtransport beginnt.

Es versteht sich, daß in besonders vorteilhafter Weiterbildung des erfindungsgemäßen Verfahrens der Kommissionierautomat umgekehrt als Artikeleinlagerungsautomat für eine Artikeleinlagerung in den Kommissionierschächten betrieben werden kann, wobei Kommissionierschächte, Entnahmevorrichtung und Übergabestation in umgekehrter Reihenfolge angesteuert und von den Artikeln durchlaufen werden.

Nach dem erfindungsgemäßen Verfahren können bevorzugt quaderförmige Artikel, insbesondere Bücher, und/oder empfindliche zerbrechbare Artikel aus Glas, etc. kommissioniert werden.

Ein Kommissionierautomat zur Durchführung des Verfahrens kennzeichnet sich insbesondere durch zumindest ein Kommissionierregal bestehend aus zumindest zwei in Reihe nebeneinander angeordneten Kommissionierschächten, in welchen quaderförmige Artikel, insbesondere Bücher, aufeinanderliegend angeordnet bzw. gestapelt sind, wobei der stapelunterste Artikel auf einer höhenverstellbaren Grundplatte des Kommissionierschachtes vertikal abgestützt und der Artikelstapel zumindest an einer Schachtwand seitlich abgestützt ist und die Grundplatte zusammen mit dem auflastenden Artikelstapel durch Kraftantrieb nach oben angehoben werden kann, um ein oder mehrere stapeloberste Artikel über eine im wesentlichen schachtoberseitige Entnahmeebene anzuheben, und zumindest eine bewegliche Entnahmevorrichtung mit zumindest einem Artikelaufnahmeschacht nach Art des Kommissionierschachtes, welcher eine kraftangetriebene höhenverstellbare Plattform zur stapeluntersten vertikalen Abstützung kommissionierter Artikel aufweist, wobei die Entnahmevorrichtung kraftangetrieben in eine Artikelentnahmestellung eines ausgewählten Kommissionierschachtes positionierbar ist und einen oberen Schiebe- oder Schwenkmechanismus aufweist, mit dessen Hilfe die über die Entnahmeebene angehobenen zu kommissionierenden Artikel des Kommissionierschachts auf die positionierte Plattform der Entnahmevorrichtung schiebbar sind, und die mit Artikeln beladene Entnahmevorrichtung zu einer Übergabestation zwecks Abgabe der Artikel kraftangetrieben bewegbar ist.

Besonders vorteilhaft ist es, wenn Kommissionierschacht und Artikelaufnahmeschacht zur Vertikalen geringfügig geneigt und insbesondere parallel zueinander angeordnet sind sowie an einer vertikalen Seitenfläche dicht angrenzend zueinander positionierbar sind. Durch schräg stehende Lagerschächte wird erreicht, daß der Stapel bei nicht planem Kommissioniergut nicht umkippen kann und zum anderen die aufeinanderlastenden Artikel schon vor einem Kommissionieren aufgefächert werden und somit ein Zusammenkleben verhindert wird.

Dabei verlaufen Grundplatte und Plattform vorzugsweise horizontal, um ein einfaches oberseitiges horizontales Ausschieben der Artikel aus einem ausgewählten Kommissionierschacht auf die positionierte Plattform der Entnahmevorrichtung zu ermöglichen.

Ein besonders vorteilhafter Kommissionierautomat kennzeichnet sich dadurch, daß zwei eine mittlere Gasse bildende Reihen an Kommissionierschächten mit vertikaler Gassenfront vorgesehen sind und in der Gasse zumindest eine Entnahmevorrichtung als kraftangetriebener Kommissionierwagen bewegbar und in Entnahmestellungen bei ausgewählten Kommissionierschächten positionierbar ist.

Hierbei ist bevorzugt ein aus zumindest zwei Kommissionierschächten bestehendes Kommissionierregal als einstückiger Einzelmodul aufgebaut, wobei mehrere zusammengesetzte Einzelmodule seitlich nebeneinander in einer einzigen Reihe oder gassenbildend mit Abstand gegenüberliegend in zwei Reihen vorgesehen sein können.

Die Gassenbreite ist bevorzugt für den Durchlauf zumindest zweier Kommissionierwagen auf zwei parallel verlaufenden Bahnen ausgelegt, wobei jeder Bahn eine Kommissionierschacht-Reihe zugeordnet ist.

Zumindest an einem Gassenende kann eine Wendestation für den oder die Kommissionierwagen vorgesehen sein, wobei die Wendestation bevorzugt eine 180°-Umkehrung eines Kommissionierwagens ermöglicht, welcher dann beide Einzelbahnen eines zweireihigen Kommissionieraautomaten befahren kann.

Bevorzugt sind mittig in Gassenlängsrichtung voneinander beabstandete Vertikalstützen für eine seitliche Abstützung und/oder für einen Gassenlängsantrieb der Kommisionierwagen vorgesehen, wobei insbesondere an den Vertikalstützen in Gassenlängsrichtung Zahnstangen befestigt sind, in welchen ein Antriebsritzel eines Fahrmotors des Kommissionierwagens eingreift.

Die Entnahmevorrichtung bzw. der Kommissionierwagen besitzt ferner einen Hubmotor für die höhenverstellbare Plattform, um eine positionierte Höhenverstellung der Plattform automatisch einzurichten.

Gegebenenfalls kann auch nur ein Motor auf dem Kommissionierwagen vorgesehen sein, welcher vorgenannten Fahrmotor und vorgenannten Hubmotor in der Funktion ersetzt.

Die Entnahmevorrichtung bzw. der Kommissionierwagen weist bevorzugt einen Schaltschrank aufweist, und es besitzt zweckmäßigerweise die höhenverstellbare Grundplatte des Kommissionierschachts einen passiven Höhenverstellantrieb, welcher durch den Hubmotor der Entnahmevorrichtung bzw. des Kommissionierwagens aktivierbar ist. Dadurch können die Kommissionierschächte als "passive Elemente" besonders einfach gestaltet und individuelle Kommissionierautomaten in bezug auf Anordnung und Größe mit Hilfe einfacher Mittel, insbesondere durch modulare Ausgestaltung der Kommissionierregale, realisiert werden. Die "Intelligenz" bzw. die Steuer- und Regelautomatik ist nahezu vollständig in jedem "autarken" Kommissionierwagen untergebracht, der einheitlich gestaltet werden kann und gleichwohl für unterschiedlich dimensionierte Kommissionierautomaten geeignet ist. Dies geht mit erheblichen Fertigungsvorteilen einher.

Zweckmäßigerweise besitzt die Entnahmevorrichtung bzw. der Kommissionierwagen untere Laufrollen, welche in Schienen geführt sind.

Entnahmevorrichtung bzw. Kommissionierwagen und Kommissionierschächte ruhen bevorzugt auf einem gemeinsamen Sockel.

Die Entnahmevorrichtung bzw. der Kommissionierwagen besitzt einen aktiven (mit Hubmotor ausgestatteten) Höhenverstellantrieb für eine Höhenverstellung der Plattform, wobei ein Antriebsritzel des Hubmotors der Entnahmevorrichtung bzw. des Kommissionierwagens in positionierter Stellung bei einem ausgewählten Kommissionierschacht in den passiven Höhenverstellantrieb des Kommissionierschachts in einen Antriebseingriff bringbar ist, um diesen für eine Höhenverstellung der Grundplatte vor einem Entnahmevorgang zu aktivieren.

Der passive Höhenverstellantrieb ist bevorzugt ein Zahnriementrieb oder ein Kettentrieb oder aber auch ein Schraubspindelantrieb oder dergleichen. Entsprechend kann auch, mit Ausnahme des Hubmotors, der Höhenverstellantrieb des Kommissionierwagens ausgebildet sein. Damit können viele Einzelteile des Verstellmechanismus sowohl für einen Kommissionierwagen als auch für einen Kommissionierschacht verwendet bzw. Einzelteile vereinheitlicht werden. Ein Kommissionierwagen ist letztlich im Prinzip ein auf Rollen laufender "Kommissionierschacht", zusätzlich versehen mit Motor(en) und Schaltschrank. Die Fertigungsvorteile sind offensichtlich. Die Grundplatte des Kommissionierschachts und die Plattform des Kommissionierwagens besitzen vorzugsweise gleich gestaltete, nach unten sperrende lösbare Rücklaufsperren.

Durch die Erfindung können somit mit Hilfe einfacher Mittel hohe Artikelstapel bei einem Kommissionierautomaten der hier infragestehenden Gattung in der Größenordnung von 3 Metern und mehr eingerichtet werden, ohne daß eine Gefahr einer Beschädigung der kommissionierten Artikel oder deren Verpackung besteht. Die Auflast der Artikel im Stapel ist bei einem Entnahmevorgang quer zum Artikelstapel deshalb unerheblich, weil der kommissionierte Artikel allein (oder mit wenigen anderen Artikeln) von oben vom Stapel entnommen wird bzw. werden. Auch entsteht bei einem Entnahmevorgang kein Kraftimpuls auf die verbleibenden Artikel, wie dies bei den eingangs erwähnten bekannten Kommissionierautomaten der Fall ist.

Besonders geeignet ist die Erfindung für ein Kommissionsgut wie Bücher oder hochempfindliche Glasartikel, auch wenn der Artikelstapel niedrig ist.

Die Erfindung wird nachfolgend anhand eines Ausführungsbeispiels unter Bezugnahme auf die beigefügte Zeichnung näher beschrieben; es zeigen:
- Fig. 1: ein nach dem erfindungsgemäßen Verfahren betriebener Kommissionierautomat in einer schematischen Seitenansicht, und

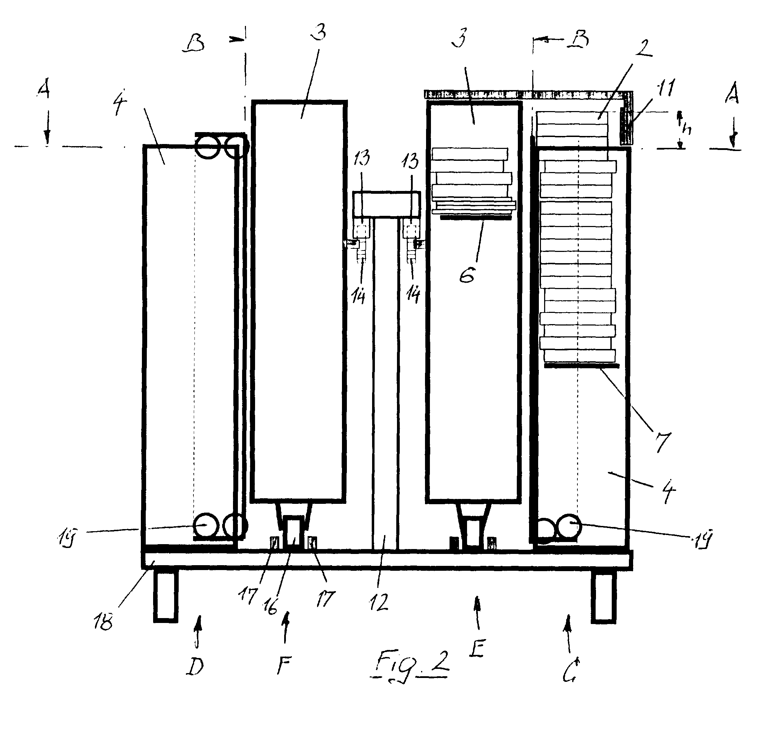

- Fig. 2: der Kommissionierautomat nach Fig. 1 in einer sche matischen Stirnansicht mit einer in einer Entnahmestellung positionierten Entnahmevorrichtung.

Gemäß Zeichnung umfaßt ein Kommissionierautomat 1 Kommissionierschächte 4 mit darin gestapelten Artikeln 2 sowie bei den Kommissionierschächten 4 positionierbare Entnahmevorrichtungen 3 zum automatischen Kommissionieren und Versandbereitstellen von Artikeln 2 bei einer (nicht veranschaulichten) Übergabe- und/oder Versandstation.

Im besonderen umfaßt der Kommissionierautomat zwei Reihen C, D von dicht nebeneinander angeordneten Kommissionierschächten 4, in welchen quaderförmige Artikel 2 unterschiedlicher Dimensionierung, insbesondere Bücher, aufeinanderliegend angeordnet bzw. gestapelt sind. Beide Reihen C, D sind voneinander beabstandet und bilden eine mittlere Längsgasse mit vertikaler Gassenseitenwand B.

In der Längsgasse können mehrere Entnahmevorrichtungen 3 in Form von untere Laufrollen 16 besitzenden, in Schienen 17 geführten Kommissionierwagen längs zweier paralleler Bahnen E, F verfahren und an der Gassenseitenwand B in unmittelbarer und ausgerichteter Nachbarschaft zu ausgewählten Kommissionierschächten 4 plaziert werden. Der Mindestabstand zweier benachbarter Wagen auf einer Bahn sollte nicht weniger als 3m bis 4m betragen.

Kommissionierwagen und Kommissionierschächte 4 sind auf einem gemeinsamen Sockel 18 angeordnet, auf welchem auch die Schienen 17 verlegt sind.

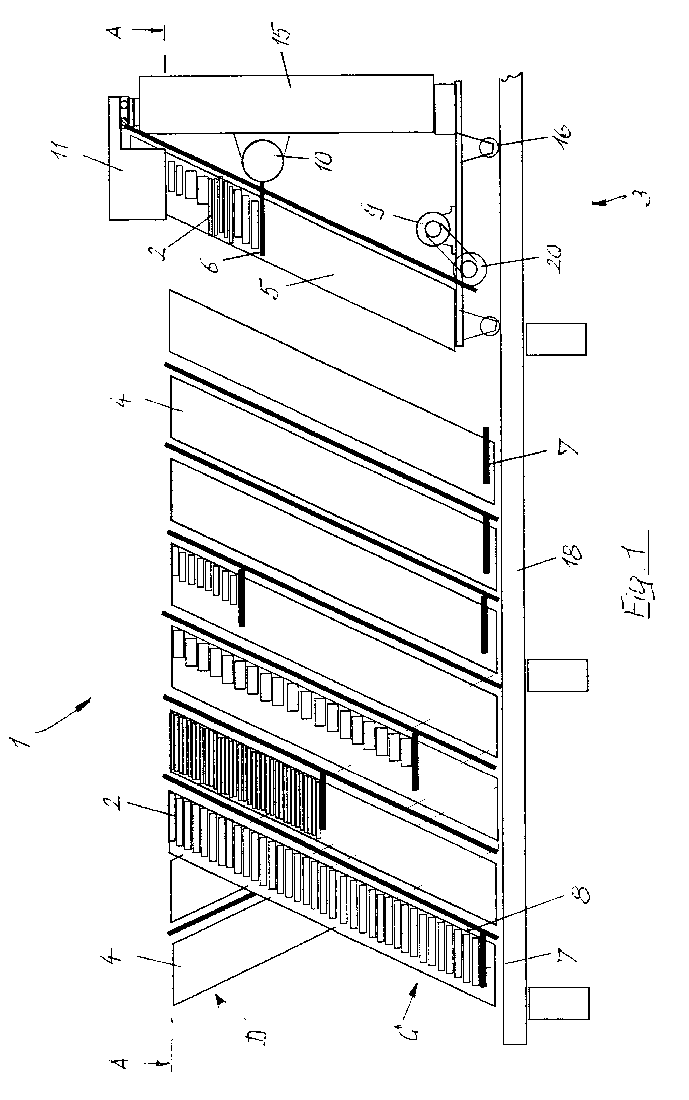

Die Kommissionierschächte 4 sind zur Vertikalen geringfügig geneigt, wie dies der Fig. 1 zu entnehmen ist, so daß z.B. Bücher in stabiler Anlage an einer schrägen Schachtwand in einem beispielsweise hohen Stapel zueinander versetzt in horizontaler Lage auf einer höhenverstellbaren horizontalen Grundplatte des Kommissionierschachtes 4 angeordnet werden können.

Die Neigung beider Kommissionierschacht-Reihen C, D ist entgegengesetzt. Da auch jeder Kommissionierwagen einen Artikelaufnahmeschacht 5 gleicher Neigung besitzt, kann ein einziger Kommissionierwagen beide Reihen C, D (nach einer 180°-Umkehrung an einem Längsende der Gasse) ansteuern.

Die Anordnung ist so getroffen, daß zu kommissionierende Artikel 2 von der Stapeloberseite eines ausgewählten Kommissionierschachtes 4 entnommen werden können, wobei vor dem Entnahmevorgang der Artikelstapel des ausgewählten Kommissionierschachtes 4 über eine schachtoberseitige Entnahmeebene A angehoben wird und der oder die über die Entnahmeebene A angehobenen Artikel 2 durch die Entnahmevorrichtung 3 mit Hilfe eines Schiebe- oder Schwenkmechanismus 11 horizontal entnommen werden.

Die Entnahmevorrichtung 3 bzw. der Kommissionierwagen wird vor dem Entnahmevorgang bei einem ausgewählten Kommissionierschacht 4 positioniert und nach einem Entnahmevorgang mit den kommissionierten Artikeln 2 zur Übergabestation kraftangetrieben bewegt, wobei die entnommenen kommissionierten Artikel 2 im Artikelaufnahmeschacht 5 der Entnahmevorrichtung 3 auf einer kraftangetriebenen höhenverstellbaren Plattform 6 gestapelt werden.

Für ein Positionieren der Entnahmevorrichtung 3 bei einem ausgewählten Kommissionierschacht 4 wird die Plattform 6 der Entnahmevorrichtung auf das Niveau der Entnahmeebene A eingestellt, um das horizontale Verschieben zu kommissionierender Artikel 2 von der Entnahmeebene des Kommissionierschachtes 4 auf die Plattform 6 der Entnahmevorrichtung bzw. auf die Oberseite bereits auf der Plattform gestapelter Artikel 2 zu ermöglichen.

Nach einem Beladen der Plattform mit kommissionierten Artikeln 2 wird die Plattform 6 der Entnahmevorrichtung 3 um das gleiche Höhenmaß h automatisch abgesenkt, wie der diesen Artikeln zugeordnete Artikelstapel des ausgewählten Kommissionierschachtes 4 vorher für den Entnahmevorgang angehoben worden ist. Damit ist ein Niveauausgleich der Plattform für ein nachfolgendes Beladen bei einem anderen Kommissionierschacht 4 wieder hergestellt.

Sind größere Kommissioniermengen des gleichen Artikelstapels zu kommissionieren, werden kommissionierte Artikel 2 des gleichen ausgewählten Kommissionierschachtes 4 in mehreren aufeinanderfolgenden Teilschritten der Plattform 6 der Entnahmevorrichtung 3 bzw. der Oberseite bereits darauf abgeladener kommissionierter Artikel zugeführt. Die Menge gleichzeitig kommissionierter Artikel wird bestimmt durch die Art, Größe und das Gewicht der Artikel unter Berücksichtigung der Empfindlichkeit der Verpackung, beispielsweise dem Papiereinband eines Buches, so daß sichergestellt ist, daß keinesfalls Artikel oder Verpackung beim Kommissionieren beschädigt werden.

Bei in unterschiedlicher Größe zu kommissionierenden Artikeln 2 wird zuerst der Artikelstapel mit den größten Artikeln und nachfolgend der Artikelstapel mit den nächst kleineren Artikeln, etc., von der Entnahmevorrichtung 3 angesteuert.

Ist ein Kommissionsauftrag zusammmengestellt, wird die Plattform 6 der mit kommissionierten Artikeln beladenen Entnahmevorrichtung 3 auf das Niveau einer Übergabestation abgesenkt, und es werden die kommissionierten Artikel der Übergabestation für einen Weitertransport übergeben.

Es sei erwähnt, daß ein Kommissionierautomat aus einzelnen Kommissionierregalen aufgebaut sein kann, wobei jedes Regal eine bestimmte Anzahl an Kommissionierschächten 4 besitzt und ein vorgefertigter einstückiger Einzelmodul ist. Je nach Platzverhältnissen und gewünschter Kommissionierkapazität lassen sich mithin individuelle Kommissionierautomaten gestalten, und zwar mit vergleichsweise einfachen Mitteln einer Fertigung und einer vergleichsweise einfachen und schnellen Montage. Erfindungsgemäß können Schächte 4 in zwei Reihen bis zu einer Länge von etwa 50m angeordnet werden.

Für ein selbsttätiges Verfahren der Entnahmevorrichtung 3 bzw. des Kommissionierwagens längs der genannten Gasse zwischen den beiden Reihen C, D weist der Kommissionierautomat 1 mittig in Gassenlängsrichtung voneinander beabstandete Vertikalstützen 12 auf, wobei an den Vertikalstützen 12 in Gassenlängsrichtung Zahnstangen 13 befestigt sind, in welchen ein Antriebsritzel 14 eines Fahrmotors 10 des Kommissionierwagens eingreift.

Darüberhinaus besitzt die Entnahmevorrichtung 3 bzw. der Kommissionierwagen einen Hubmotor 9 für die höhenverstellbare Plattform 6 sowie einen Schaltschrank 15.

Die Grundplatte 7 des Kommissionierschachts 4 hat einen passiven Höhenverstellantrieb 19, welcher durch den Hubmotor 9 der Entnahmevorrichtung 3 bzw. des Kommissionierwagens aktivierbar ist. Für eine Aktivierung kann ein Antriebsritzel des Hubmotors 9 der Entnahmevorrichtung 3 bzw. des Kommissionierwagens in positionierter Stellung bei einem ausgewählten Kommissionierschacht 4 in einen Antriebseingriff gebracht werden.

Der Höheneinstellungsantrieb 20 der Plattform 6 der Entnahmevorrichtung 3 ist nach Art des passiven Höhenverstellantriebs 19 der Grundplatte 7 des Kommissionierschachts 4 ausgebildet, so daß sich insgesamt ein einfacher Aufbau ergibt.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Verfahren zum automatischen Kommissionieren und Versandbereitstellen von in Kommissionierschächten eines Kommissionierautomaten (1) gestapelten Artikeln (2) mit Hilfe einer Entnahmevorrichtung (3),
dadurch gekennzeichnet,
daß der oder die zu kommissionierenden Artikel (2) von der Stapeloberseite eines ausgewählten Kommissionierschachtes (4) entnommen werden, wobei vor dem Entnahmevorgang der Artikelstapel des ausgewählten Kommissionierschachtes (4) über eine im wesentlichen schachtoberseitige Entnahmeebene (A) angehoben wird und der oder die über die Entnahmeebene (A) angehobenen Artikel (2) durch die Entnahmevorrichtung (3) im wesentlichen horizontal, vorzugsweise durch Verschieben, entnommen und die entnommenen kommissionierten Artikel (2) in einem Artikelaufnahmeschacht (5) der Entnahmevorrichtung (3) auf einer kraftangetriebenen höhenverstellbaren Plattform (6) gestapelt werden.

2. Verfahren nach Anspruch 1,
dadurch gekennzeichnet,
daß die vorzugsweise verfahrbare Entnahmevorrichtung (3) vor dem Entnahmevorgang bei einem ausgewählten Kommissionierschacht (4) positioniert und nach einem Entnahmevorgang mit den kommissionierten Artikeln (2) zu einer Übergabestation kraftangetrieben bewegt wird, und bei der Übergabestation die kommissionierten Artikel abgegeben werden, wobei für ein Positionieren der Entnahmevorrichtung (3) bei einem ausgewählten Kommissionierschacht (4) die Plattform (6) der Entnahmevorrichtung durch deren Kraftantrieb auf das Niveau der Entnahmeebene (A) eingestellt wird, so daß eine Horizontalverschiebung oder eine Horizontalverschwenkung zu kommissionierender Artikel (2) von der Entnahmeebene des Kommissionierschachtes (4) auf die Plattform (6) der Entnahmevorrichtung bzw. auf die Oberseite bereits auf der Plattform gestapelter Artikel (2) möglich ist.

3. Verfahren nach Anspruch 2,
dadurch gekennzeichnet,
daß die Plattform (6) der Entnahmevorrichtung (3) nach einem Beladen mit kommissionierten Artikeln (2) um das gleiche Höhenmaß (h) abgesenkt wird, wie der diesen Artikeln zugeordnete Artikelstapel des ausgewählten Kommissionierschachtes (4) vorher für den Entnahmevorgang angehoben worden ist.

4. Verfahren nach einem der Ansprüche 1 bis 3,
dadurch gekennzeichnet,
daß vor dem Entnahmevorgang die Oberseite der Plattform (6) der Entnahmevorrichtung bzw. die Oberseite der auf der Plattform bereits abgeladener kommissionierter Artikel in Höhe der Entnahmeebene (A) eines ausgewählten Kommissionierschachtes für eine Höhenendstellung der Plattform bei einem Entnahmevorgang abgetastet bzw. gefühlt wird, und insbesondere kommissionierte Artikel (2) des gleichen ausgewählten Kommissionierschachtes (4) in zumindest zwei aufeinanderfolgenden Teilschritten der Plattform (6) der Entnahmevorrichtung (3) bzw. der Oberseite bereits darauf abgeladener kommissionierter Artikel zugeführt werden.

5. Verfahren nach einem der Ansprüche 1 bis 4,
dadurch gekennzeichnet,
daß bei in unterschiedlicher Größe zu kommissionierenden Artikeln (2) zuerst der Artikelstapel mit den größten Artikeln und nachfolgend der Artikelstapel mit den nächst kleineren Artikeln, etc., von der Entnahmevorrichtung (3) angesteuert und kommissioniert wird.

6. Verfahren nach einem der Ansprüche 2 bis 5,
dadurch gekennzeichnet,
daß die mit kommissionierten Artikeln (2) beladene Entnahmevorrichtung (3) im wesentlichen horizontal zu der von den Kommissionierschächten (4) benachbarten oder entfernten Übergabestation bewegt wird, wobei die Plattform (6) der mit kommissionierten Artikeln beladenen Entnahmevorrichtung (3) auf das Niveau der Übergabestation abgesenkt wird, und die kommissionierten Artikel der Übergabestation für einen Weitertransport übergeben werden, und bei der Übergabestation die kommissionierten Artikel seitlich in eine offene Verpackung hineingeschoben werden, und die Verpackung geschlossen wird.

7. Verfahren nach einem der Ansprüche 1 bis 6,
dadurch gekennzeichnet,
daß der Kommissionierautomat umgekehrt als Artikeleinlagerungsautomat für eine Artikeleinlagerung in den Kommissionierschächten betrieben wird, wobei Kommissionierschächte (4), Entnahmevorrichtung (3) und Übergabestation in umgekehrter Reihenfolge angesteuert und von den Artikeln (2) durchlaufen werden.

8. Verfahren nach einem der Ansprüche 1 bis 7,
dadurch gekennzeichnet,
daß quaderförmige Artikel (2), insbesondere Bücher, und/ oder empfindliche zerbrechbare Artikel aus Glas, etc., kommissioniert werden.

9. Kommissionierautomat zur Durchführung des Verfahrens nach einem der Ansprüche 1 bis 8,
gekennzeichnet durch
- zumindest ein Kommissionierregal bestehend aus zumindest zwei in Reihe nebeneinander angeordneten Kommissionierschächten (4), in welchen quaderförmige Artikel (2), insbesondere Bücher, aufeinanderliegend angeordnet bzw. gestapelt sind, wobei der stapelunterste Artikel auf einer höhenverstellbaren Grundplatte (7) des Kommissionierschachtes (4) vertikal abgestützt und der Artikelstapel zumindest an einer Schachtwand (8) seitlich abgestützt ist und die Grundplatte (7) zusammen mit dem auflastenden Artikelstapel durch Kraftantrieb nach oben angehoben werden kann, um ein oder mehrere stapeloberste Artikel (2) über eine im wesentlichen schachtoberseitige Entnahmeebene (A) anzuheben, und
- zumindest eine bewegliche Entnahmevorrichtung (3) mit zumindest einem Artikelaufnahmeschacht (5) nach Art des Kommissionierschachtes (4), welcher eine kraftangetriebene höhenverstellbare Plattform (6) zur stapeluntersten vertikalen Abstützung kommissionierter Artikel aufweist, wobei
- die Entnahmevorrichtung (3) kraftangetrieben in eine Artikelentnahmestellung eines ausgewählten Kommissionierschachtes (4) positionierbar ist und einen oberen Schiebe- oder Schwenkmechanismus (11) aufweist, mit dessen Hilfe die über die Entnahmeebene (A) angehobenen zu kommissionierenden Artikel (2) des Kommissionierschachts auf die positionierte Plattform (6) der Entnahmevorrichtung (3) schiebbar oder verschwenkbar sind, und die mit Artikeln beladene Entnahmevorrichtung (3) zu einer Übergabestation zwecks Abgabe der Artikel kraftangetrieben bewegbar ist.

10. Kommissionierautomat nach Anspruch 9,
dadurch gekennzeichnet,
daß Kommissionierschacht (4) und Artikelaufnahmeschacht (5) zur Vertikalen geringfügig geneigt und insbesondere parallel zueinander angeordnet sind sowie an einer vertikalen Seitenfläche (B) dicht angrenzend zueinander positionierbar sind, wobei die Grundplatte (7) und die Plattform (6) horizontal verlaufen und als stapelunterste Abstützung von quaderförmigen Artikeln (2) wie Bücher dienen.

11. Kommissionierautomat nach Anspruch 9 oder 10,
dadurch gekennzeichnet,
daß zwei eine mittlere Gasse bildende Reihen (C, D) an Kommissionierschächten (4) mit vertikaler Gassenfront vorgesehen sind und in der Gasse zumindest eine Entnahmevorrichtung (3) als kraftangetriebener Kommissionierwagen bewegbar und in Entnahmestellungen bei ausgewählten Kommissionierschächten (4) positionierbar ist, wobei gegebenenfalls ein Kommissionierregal bestehend aus zumindest zwei Kommissionierschächten (4) als einstückiger Einzelmodul aufgebaut sein kann und mehrere zusammengesetzte Einzelmodule seitlich nebeneinander in einer einzigen Reihe (C) oder gassenbildend mit Abstand gegenüberliegend in zwei Reihen (C, D) vorgesehen sein können.

12. Kommissionierautomat nach Anspruch 11,
dadurch gekennzeichnet,
daß die Gassenbreite für den Durchlauf zumindest zweier Kommissionierwagen auf zwei parallel verlaufenden Bahnen (E, F) ausgelegt und jede Bahn (E bzw. F) einer Kommissionierschacht-Reihe (C bzw. D) zugeordnet ist, und zumindest an einem Gassenende eine Wendestation für den oder die Kommissionierwagen vorgesehen sein kann.

13. Kommissionierautomat nach einem der Ansprüche 9 bis 12,
dadurch gekennzeichnet,
daß die Grundplatte (7) des Kommissionierschachts (4) einen passiven Höhenverstellantrieb (19) aufweist, welcher durch den Hubmotor (9) der Entnahmevorrichtung (3) bzw. des Kommissionierwagens aktivierbar ist, wobei ein Antriebsritzel des Hubmotors (9) der Entnahmevorrichtung (3) bzw. des Kommissionierwagens in positionierter Stellung bei einem ausgewählten Kommissionierschacht (4) in den passiven Höhenverstellantrieb (19) des Kommissionierschachts (4) in einen Antriebseingriff bringbar ist.
